# EUROPÄISCHE PATENTSCHRIFT

(11) **EP 0 437 571 B1**
(45) Veröffentlichungstag und Bekanntmachung des Hinweises auf die Patenterteilung: **14.09.1994**
(21) Anmeldenummer: 90911577.6
(22) Anmeldetag: 14.07.1990
(51) Int. Cl.: H02K 15/03, H02K 1/17

(54) **VERFAHREN ZUR HERSTELLUNG EINES ELEKTROMOTORS**
PROCESS FOR THE ASSEMBLY OF AN ELECTRIC MOTOR
PROCEDE POUR FABRIQUER UN MOTEUR ELECTRIQUE

(30) Priorität: 20.07.1989 DE 3923974
(43) Veröffentlichungstag der Anmeldung: 24.07.1991
(73) Patentinhaber: ITT Automotive Europe GmbH, 60488 Frankfurt am Main (DE)
(72) Erfinder: PROHASKA, Hans, D-7120 Bietigheim-Bissingen (DE)
(86) Internationale Anmeldenummer: EP9001158
(87) Internationale Veröffentlichungsnummer: WO9101588

(56) Entgegenhaltungen:
- DE-U- 8 624 280
- FR-A- 1 452 982
- FR-A- 1 588 988
- FR-A- 2 125 756
- FR-A- 2 518 327
- US-A- 2 971 107
- PATENT ABSTRACTS OF JAPAN Vol. 8, No. 167 (E-258)(1604) 2 August 1984, & JP-A-59 63965 (MITSUBISHI) 11 April 1984,

## Beschreibung

Die Erfindung bezieht sich auf ein Verfahren zur Herstellung eines Elektromotors, insbesondere eines Elektromotors zum Antrieb von Scheibenwischern an Kraftfahrzeugen, gemäß den Merkmalen des Oberbegriffs des Anspruchs 1.

Die für Scheibenwischeranlagen an Kraftfahrzeugen verwendeten Elektromotore haben üblicherweise ein Gehäuse mit einem metallischen Gehäusemantel, der aus einer Metallplatine gebogen bzw. gerollt ist. Dabei wird bei manchen Herstellungsverfahren beim Rollen dieses Gehäusemantels diese Metallplatine um den Boden herumgebogen, wobei Haltemittel am Boden und Haltemittel an dieser Metallplatine fortschreitend ineinandergreifen. Nach dem Biegen der Metallplatine ist also zugleich eine Fixierung des Bodens des Motorgehäuses erreicht. Bei anderen Herstellungsverfahren wird zunächst die Metallplatine zu einem rohrförmigen Gehäusemantel gebogen und erst in einem nachfolgenden Arbeitsgang wird der Gehäuseboden oder -Deckel an diesem Gehäusemantel befestigt.

Bei den meisten Scheibenwischermotoren wird dann der Gehäusemantel mit einem Überzug beschichtet, der als Korrosionsschutz dient und außerdem eine verbesserte Wärmeabstrahlung gewährleisten soll. In manchen Fällen wird dazu ein schwarzer Einbrennlack aufgetragen. In anderen Fällen wird der Gehäusemantel mit einem Pulver beschichtet. In beiden Fällen ist bei diesem Verfahrensschritt eine Wärmezufuhr erforderlich, damit dieser Überzug die erforderliche Härte und Beständigkeit aufweist. Bei der Pulverbeschichtung beispielsweise wird zunächst das Gehäuse mittels Heißluft erwärmt, dann das Material aufgetragen und schließlich das Gehäuse noch für eine gewisse Zeit auf erhöhter Temperatur gehalten, bis das Beschichtungspulver ausgehärtet ist.

An diesem mit einem solchen lackierten oder beschichteten Überzug versehenen Gehäuse werden dann die Magnete befestigt. Üblicherweise verwendet man dazu Federklammern, die mit dem Gehäusemantel vernietet sind.

In der FR-A-2518327 ist ein ähnliches Verfahren zum Herstellen eines Gehäuses für einen Elektromotor beschrieben, bei dem zunächst die Magnete in das Gehäuse eingeklebt werden und anschließend das Gehäuse und die eingeklebten Magnete mit einem Schutzüberzug versehen werden.

Die Außenkontur des Magneten kann schon aus Toleranzgründen nicht exakt mit der Kontur der Innenseite der Gehäusemantelfläche übereinstimmen. Aus diesem Grunde wird der Magnet so dimensioniert, daß er nur an den Randbereichen, an denen er von den Federklammern erfaßt wird, an der Innenseite des Gehäusemantels anliegt, wobei dann im mittleren Scheitelbereich dieses segmentförmigen Magneten ein Spalt zum Gehäusemantel verbleibt. Dieser Spalt wird in den meisten Fällen durch einen nachträglich aufgebrachten Lack ausgefüllt, wodurch eine unerwünschte Geräuschbildung aufgrund von Vibrationen des federnd abgestützten Magneten vermieden werden soll.

Scheibenwischermotoren, die nach diesem Verfahren hergestellt sind, haben sich in der Praxis in großem Umfang bewährt. Allerdings ist festzustellen, daß die Montage der Magnete mit diesen vernieteten Federklammern Probleme bereitet und eine Automatisierung dieses Verfahrensschrittes nur mit einem verhältnismäßig hohen Aufwand möglicht ist. Bei vergleichsweise großen Toleranzabweichungen ist außerdem eine unzulässig hohe Geräuschbildung aufgrund von Vibrationen trotz des in den Spalt eingefüllten Lackes nicht völlig ausgeschlossen.

Es wurde daher schon vorgeschlagen (DE-U-8624280.6) die Magnete in das Gehäuse einzukleben. Dazu wird auf die Oberfläche der ringsegmentförmigen Magnete eine Folie aufgebracht, die mit einem Harzauftrag versehen ist. Die Folie wird an einzelnen Punkten erwärmt und so auf den Magneten fixiert. Anschließend werden die so vorbereiteten Magnete in das Gehäuse eingebracht und gegen die Innenwand gedrückt. Mit Hilfe einer Hochfrequenzspule wird der Harzauftrag erwärmt, so daß die Magnete flächig mit dem Gehäuse verklebt werden. Danach wird der Kleber in einem Wärmeumluftofen ausgehärtet.

Der vorliegenden Erfindung liegt daher die Aufgabe zugrunde, das Verfahren zur Herstellung eines solchen Elektromotors zu vereinfachen und so zu verbessern, daß störende Geräusche weitgehend vermieden werden.

Diese Aufgabe wird erfindungsgemäß mit den kennzeichnenden Merkmalen des Anspruchs 1 gelöst.

Der Erfindung liegt dabei die Erkenntnis zugrunde, daß bei einer Fixierung der Magnete mittels eines Schmelzklebers eine verbesserte Verbindung der Magnete mit dem Gehäusemantel erreichbar ist und folglich Vibrationsgeräusche praktisch ausgeschlossen sind. Dabei treten keine höheren Herstellkosten auf, wenn man gemäß einem wesentlichen Merkmal der vorliegenden Erfindung die zum Aushärten des Schmelzklebers erforderliche Wärme nicht in einem separaten Verfahrensschritt zuführt, sondern die Magnete schon vor der Aufbringung des Überzugs in das Gehäuse einbaut und dann die beispielsweise zum Einbrennen des Lackes erforderliche Wärme auch zur Aushärtung des Schmelzklebers ausnutzt.

Damit unterscheidet sich das Verfahren auch wesentlich von einem bekannten Herstellungsverfahren, bei dem ebenfalls die Magnete am Gehäusemantel festgeklebt, insbesondere mittels einer Klebefolie gehalten sind. Bei diesem bekannten Verfahren wird eine Hochfrequenzspule über das Gehäuse gestülpt und die Vernetzung des Klebemittels erfolgt also durch Hochstromheizung. Nach diesem relativ kurzzeitigen Prozeß erfolgt die Endaushärtung der Folie in einem Wärmeumluftofen. Eine Verknüpfung der Wärmezufuhr zur Aushärtung des Klebers mit der für die Beschichtung erforderlichen Wärmezufuhr ist bei diesem bekannten Verfahren nicht vorgesehen.

Gemäß einer vorteilhaften Weiterbildung der Erfindung wird der Schmelzkleber auf die Außenfläche des Magneten aufgetragen und dann dieser Magnet mit dem Schmelzkleber in das Gehäuse eingesetzt. Da in diesem Zustand der Schmelzkleber noch vergleichsweise zähelastisch ist, dient er gewissermaßen als Abstandshalter zwischen dem Magneten und der Innenseite des Gehäusemantels. Man kann daher das Gehäuse, dessen Gehäusemantel wegen des Verformungsprozesses bei der Herstellung meist mit einem Fettfilm überzogen ist, zusammen mit dem montierten Magnet in einem geeigneten Lösungsmittel waschen, weil wegen dieses Spaltes das Lösungsmittel ohne Schwierigkeiten die gesamte Innenseite der Gehäusemantelfläche erreichen kann. Dies ist wichtig, weil nur so eine einwandfreie Klebeverbindung mit dem aufgrund der Wärmezufuhr verlaufenden Schmelzkleber möglich ist. Dieses Auswaschen des Motorgehäuses nach der Montage der Magnete ist deshalb besonders vorteilhaft, weil dann unmittelbar anschließend die Beschichtung erfolgen kann und folglich die Gefahr einer erneuten Verschmutzung des Gehäusemantels bei weiteren Bearbeitungsvorgängen reduziert ist.

Die Erfindung wird nachstehend anhand des in der Zeichnung dargestellten Ausführungsbeispieles näher erläutert. Dabei zeigen:
- Fig. 1: eine Seitenansicht auf eine Metallplatine,
- Fig. 2: eine Seitenansicht auf ein Motorgehäuseteil,
- Fig. 3: eine Stirnansicht auf einen Magneten,
- Fig. 4: eine Ansicht in Pfeilrichtung P auf den Magneten,
- Fig. 5: eine Ansicht auf eine Federklammer,
- Fig. 6: einen Schnitt durch den Elektromotor vor der Wärmezufuhr und der Beschichtung und
- Fig. 7: einen Schnitt durch den Motor nach Aushärtung des Klebers und der Beschichtung.

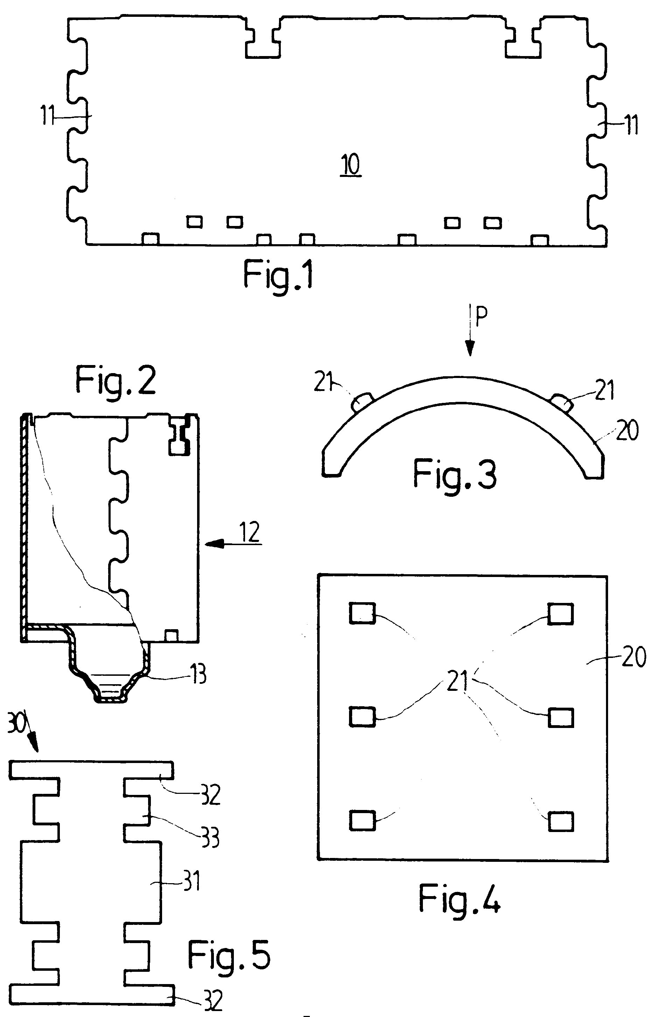

In Fig. 1 ist eine mit 10 bezeichnete Metallplatine dargestellt, die an den schmalen Seiten jeweils eine Verzahnung 11 aufweist, wobei diese Verzahnungen nach dem Rollen dieser Metallplatine ineinandergreifen, wie das aus Fig. 2 ersichtlich ist. In diesem zylindrischen oder rohrartigen Gehäusemantel 12 ist ein Lagerdeckel 13 festgelegt. Bei dem dargestellten Ausführungsbeispiel ist dieser Lagerdeckel 13 nachträglich nach dem Biegen der Metallplatine 10 in den Gehäusemantel 12 eingesetzt, doch gibt es auch Herstellungsverfahren, bei denen die Metallplatine 10 um diesen Lagerdeckel 13 herumgebogen wird, so daß in einem Arbeitsgang dieses topfförmige Gehäuse nach Fig. 2 hergestellt ist. Die Art und Weise der Herstellung dieses Gehäuses ist aber für die vorliegende Erfindung nicht von besonderer Bedeutung, so daß sich weitere Erläuterungen erübrigen dürften.

In den Fig. 3 und 4 ist ein ringsegmentförmiger Magnet 20 dargestellt, der später in das Gehäuse eingesetzt und an der Innenseite des Gehäusemantels befestigt wird. Durch die Fig. 3 und 4 soll angedeutet werden, daß auf diesen Magneten bereichsweise ein Schmelzkleber aufgetragen ist, wobei die Klebepunkte mit 21 bezeichnet sind. In Fig. 4 sind sechs derartige Klebepunkte 21 angedeutet, die nahe dem seitlichen Rand der Magnete liegen. Anstelle einzelner Klebepunkte 21 könnte man auch Klebelinien vorsehen.

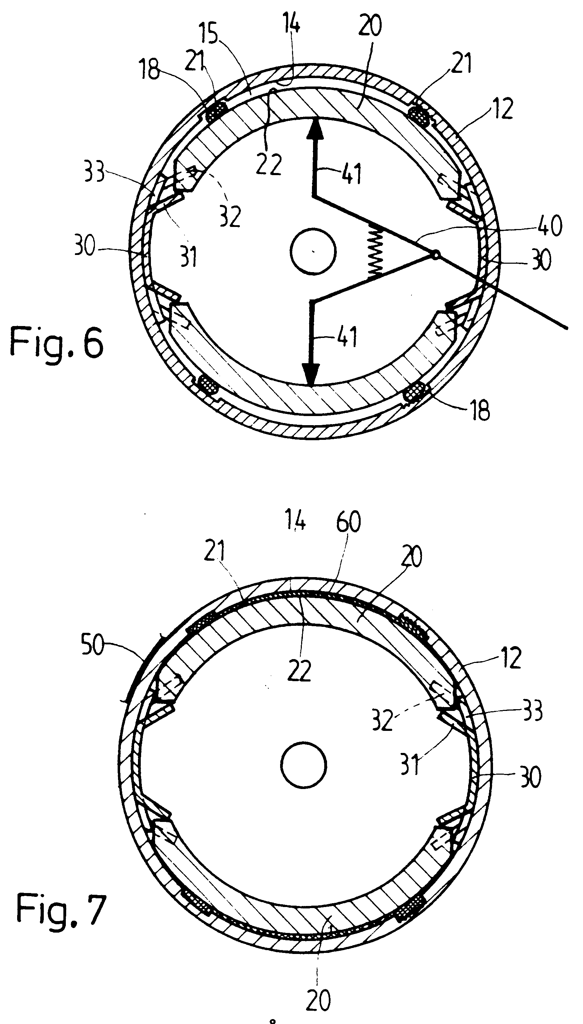

Die gemäß Fig. 3 und 4 vorbereiteten Magnete werden nun in das Gehäuse eingesetzt, was aus Fig. 6 hervorgeht. Dabei dienen an Federklammern 30 als Lagesicherungselemente für diese Magnete 20, die in Umfangsrichtung zwischen den Stirnflächen dieser Magnete 20 angeordnet sind und durch die Einwirkung entsprechender Federlappen 31 diese Magnete radial gegen den Gehäusemantel 12 drücken. Abweichend von den bekannten Ausführungen haben die in Fig. 5 dargestellten Federklammern an den axialen Stirnseiten beidseitig jeweils zwei abstehende Anschläge 32, so daß also die Magnete 20 in Achsrichtung des Gehäuses in beiden Richtungen lagegesichert sind. Dabei wirken aber diese Klebepunkte 21 dieses Schmelzklebers zunächst gewissermaßen als Distanzhalter, so daß zwischen der Außenfläche 22 des Magneten und der Innenseite 14 des Gehäusemantels ein dünner Spalt 15 verbleibt, der in Fig. 6 aus Gründen einer besseren übersichtlichkeit übertrieben groß gezeichnet ist. Aus Fig. 6 geht hervor, daß diese Federklammern 30 nicht mit dem Gehäusemantel vernietet sind. Diese Federklammern sind vielmehr ausschließlich durch die gegenseitige Verspannung mit den Magneten in Umfangsrichtung gehalten. Dabei ist wichtig, daß die Federlappen 31 so an den Magneten 20 anliegen, daß keine wesentliche Kraftkomponente in radialer Richtung zum Mittelpunkt des Gehäuses hin erzeugt wird, weil sich sonst die Federklammern lösen könnten. Um aber auf jeden Fall einen sicheren Halt dieser Federklammern zu gewährleisten, sind Sicherungslappen 33 vorgesehen, die abschnittsweise in einen Bereich zwischen den Magneten 20 und der Innenseite 14 des Gehäusemantels 12 greifen, was aus den Fig. 6 und 7 deutlich hervorgeht.

Aus Fig. 6 geht weiter hervor, daß auf der Innenseite 14 des Gehäusemantels 12 Ausnehmungen 18 eingeprägt sind, die an Stellen angeordnet sind, in die der Schmelzkleber 21 eingreifen kann. Die Prägung dieser Ausnehmungen 18 erfolgt vorzugsweise zeitgleich mit dem Ausstanzen der in Fig. 1 dargestellten Metallplatine, auf jeden Fall aber vor dem Biegevorgang.

Die Federklammern 30 erzeugen - wie schon erwähnt - einen radialen Druck, mit dem die Magnete 20 über den Schmelzkleber 21 an der Innenseite 14 des Gehäusemantels 12 abgestützt sind. Wenn in Einzelfällen dieser Druck nicht ausreicht, kann man als Lagesicherungselement für die Magnete 20 ein Spreizgerät 40 als Montagehilfe vorsehen, das in Fig. 6 nur schematisch dargestellt ist. Dieses Spreizgerät 40 soll also federnd aneinander abgestützte und in radialer Richtung nach außen vorgespannte, nur schematisch dargestellte Spannbacken 41 aufweisen, die während der Aushärtung des Schmelzklebers einen zusätzlichen radialen Druck auf die beiden Magnete 20 ausüben.

Die Baueinheit gemäß Fig. 6 wird nun einem Waschvorgang in einem geeigneten Lösungsmittel unterzogen, wobei das Lösungsmittel ohne Schwierigkeiten auch die Innenseite des Gehäusemantels 12 erreicht, weil in diesem Zustand noch ein Spalt 15 zwischen dieser Innenseite 14 und den Außenflächen 22 des Magneten gegeben ist. Nach diesem Auswaschvorgang wird die Baueinheit nach Fig. 6 in der an sich bekannten Weise mit einem überzug 50 versehen, der in Fig. 7 nur abschnittsweise und dabei auch übertrieben dick dargestellt ist. Dazu wird diese Baueinheit gemäß Fig. 6, also das Gehäuse mit den darin eingesetzten Magneten 20, beispielsweise mittels Warmluft erwärmt. Dann wird das Gehäuse mit einem entsprechenden Pulver oder einem Einbrennlack beschichtet und schließlich wird diese Baueinheit weiterhin einer längeren Wärmebehandlung unterzogen, so daß dieser überzug 50 die erforderliche Beständigkeit erhält. Bei dieser Wärmebehandlung wird der Schmelzkleber verflüssigt und fließt dann zum einen in diese Ausnehmungen 18, zum anderen aber auch in den aufgrund vermeintlicher Toleranzen oder auch aufgrund entsprechender Dimensionierung bewußt vorgesehenen Spalt 60 zwischen dieser Außenfläche 22 am Magneten 20 und der Innenseite 14 am Gehäusemantel 12, wie das aus Fig. 7 ersichtlich ist, die das Gehäuse nach der Wärmebehandlung zeigt. Man erkennt daraus, daß dieser Schmelzkleber 21 sich flächenhaft verteilt und den sonst mit einem Lack ausgefüllten Spalt oder Hohlraum 60 ausfüllt. Eine vollständige Ausfüllung ist dabei nicht unbedingt notwendig, weil durch die hohe Beanspruchungen standhaltende Klebeverbindung zwischen den Magneten und dem Gehäusemantel Vibrationsbewegungen zwischen diesen Elementen und damit auch Vibrationsgeräusche praktisch ausgeschlossen sind.

Abschließend wird darauf hingewiesen, daß der Grundgedanke der vorliegenden Erfindung natürlich auch bei Gehäusen realisierbar ist, die einen aus einer Metallplatine gezogenen Gehäusetopf aufweisen. Es ist auch nicht unbedingt erforderlich, daß als Lagesicherungselement Federklammern verwendet werden. Man könnte beispielsweise auch zur Lagesicherung nur ein Spreizgerät als Montagehilfe verwenden. Die Erfindung ist auch keineswegs auf eine Ausführung eingeschränkt, bei der dieser Schmelzkleber nur punktuell auf den Magneten aufgebracht wird. Man könnte auch eine Folie mit einem Schmelzkleberüberzug verwenden. Es ist auch nicht unbedingt erforderlich, daß man den Schmelzkleber auf den Außenflächen des Magneten anbringt, doch wird einem solchen Verfahren der Vorzug gegeben, weil dort dieser Schmelzkleber auch ohne Wärmezufuhr haftet, was auf dem noch mit einem Fettfilm überzogenen Gehäusemantel nicht gegeben wäre, sofern man den Waschvorgang erst unmittelbar vor dem Beschichtungsvorgang vornehmen will.

## Patentansprüche

1. Verfahren zur Herstellung eines Elektromotors, insbesondere eines Elektromotors zum Antrieb von Scheibenswischern an Kraftfahrzeugen, mit einem Gehäuse mit einem metallischen Gehäusemantel (12) sowie ringsegmentförmigen, an der Innenseite des Gehäusemantels (12) gehaltenen Magneten (20), wobei der Gehäusemantel (12) mit einem unter Wärmezufuhr aufgebrachten überzug beschichtet wird, dadurch gekennzeichnet, daß zur Verbindung zwischen dem Magnet (20) und dem Gehäusemantel (12) ein Schmelzkleber (21) verwendet wird, daß die Magnete (20) vor der Beschichtung in das Gehäuse eingesetzt werden und daß durch die Wärmezufuhr bei der Beschichtung der Schmelzkleber (21) ausgehärtet wird.

2. Verfahren nach Anspruch 1, dadurch gekennzeichnet, daß in an sich bekannter Weise der Gehäusemantel (12) aus einer Metallplatine (10) gebogen oder gerollt wird, wobei vor dem Biegevorgang in die Metallplatine (10) auf der Innenseite (14) partiell Ausnehmungen (18) zur späteren Aufnahme des Schmelzklebers (21) eingeprägt werden.

3. Verfahren nach Anspruch 1 oder 2, dadurch gekennzeichnet, daß der Schmelzkleber (21) auf den Magneten (20) aufgebracht wird und die mit dem Schmelzkleber (21) versehenen Magnete (20) lagerichtig in den Gehäusemantel (12) eingesetzt werden.

4. Verfahren nach Anspruch 1, 2 oder 3, dadurch gekennzeichnet, daß die Magnete (20) durch Lagesicherungsmittel (30, 40) gehalten und über den Schmelzkleber (21) an der Innenseite (14) des Gehäusemantels (12) abgestützt werden.

5. Verfahren nach Anspruch 4, dadurch gekennzeichnet, daß als Lagesicherungsmittel zwei Federklammern (30) dienen, die in Umfangsrichtung zwischen den Magneten (20) angeordnet sind und diese Magnete (20) in radialer Richtung gegen die Innenseite (14) des Gehäusemantels (12) vorspannen.

6. Verfahren nach Anspruch 5, dadurch gekennzeichnet, daß die Federklammern (30) nietlos zwischen den Magneten (20) montiert werden, wobei durch Anschläge (32) an beiden Stirnseiten die Magnete (20) in Achsrichtung fixiert werden und Sicherungslappen (33) an den Federklammern (30) in einen Bereich zwischen Magnet (20) und der Innenseite (14) des Gehäusemantels (12) greifen.

7. Verfahren nach Anspruch 4, 5 oder 6, dadurch gekennzeichnet, daß als Lagesicherungsmittel ein nur als Montagehilfe dienendes Spreizgerät (40) in das Gehäuse eingesetzt ist, das diese Magnete (20) in radialer Richtung gegen die Innenseite (14) des Gehäusemantels (12) vorspannt.

8. Verfahren nach wenigstens einem der vorhergehenden Ansprüche, dadurch gekennzeichnet, daß der Gehäusemantel (12) mit den vormontierten Magneten (20) einem Waschvorgang unterzogen wird.

## Claims

1. A method for manufacturing an electric motor, especially an electric motor for driving windshield wipers of automotive vehicles, comprising a casing with a metallic casing shell (12) and ring segment-shaped magnets (20) retained at the inside of the casing shell (12), said casing shell (12) being provided with a coating applied while supplying heat, wherein a fusible adhesive (21) is used for connecting the said magnet (20) and the said casing shell (12), wherein the said magnets (20) are inserted into the said casing before the said coating and wherein the said fusible adhesive (21) is cured due to the heat supply during the said coating.

2. A method as claimed in claim 1, wherein in a manner which as such is prior art the said casing shell (12) is bent or rolled from a metal blank (10), recesses (18) for the subsequent accommodation of the said fusible adhesive (21) being impressed at parts of the said inside (14) of the said metal blank (10) before the said bending operation.

3. A method as claimed in claim 1 or in claim 2, wherein the said fusible adhesive (21) is applied onto the said magnet (20) and the said magnets (20) provided with the said fusible adhesive (21) are inserted in the correct position into the said casing shell (12).

4. A method as claimed in claims 1, 2 or 3, wherein the said magnets (20) are retained by position-securing means (30, 40) and are supported through the said fusible adhesive (21) at the said inside (14) of the said casing shell (12).

5. A method as claimed in claim 4, wherein two resilient clamps (30) serve as position-securing means, which said resilient clamps (30) are arranged between the said magnets (20) in circumferential direction and which bias the said magnets (20) in radial direction against the said inside (14) of the said casing shell (12).

6. A method as claimed in claim 5, wherein the said resilient clamps (30) are assembled between the said magnets (20) without rivets, the said magnets (20) being fixed in axial direction by stops (32) at both front faces and retaining tabs (33) at the said resilient clamps (30) engaging a range between the said magnet (20) and the said inside (14) of the said casing shell (12).

7. A method as claimed in claims 4, 5 or 6, wherein as a position-securing means an expanding device (40) serving only as an assembly aid is inserted into the casing, which said expanding device (40) biases the said magnets (20) in radial direction against the said inside (14) of the said casing shell (12).

8. A method as claimed in at least one of the preceding claims, wherein the said casing shell (12) with the pre-assembled said magnets (20) is subjected to a washing procedure.

## Revendications

1. Procédé pour fabriquer un moteur électrique, notamment un moteur électrique servant à entraîner des essuie-glaces de véhicules automobiles, comprenant un boîtier comportant une enveloppe métallique (12) ainsi que des aimants (20) en forme de segments annulaires et qui sont retenus sur la face intérieure de l'enveloppe (12) du boîtier, l'enveloppe (12) du boîtier étant recouverte par un revêtement déposé moyennant l'application d'une chaleur, caractérisé en ce que pour établir la liaison entre l'aimant (20) et l'enveloppe (12) du boîtier, on utilise une colle fusible (21), qu'on insère les aimants (20) dans le boîtier avant le dépôt du revêtement et qu'on fait durcir la colle fusible (21) lors du dépôt du revêtement, moyennant l'application d'une chaleur.

2. Procédé selon la revendication 1, caractérisé en ce que de façon connue en soi, on forme l'enveloppe (12) du boîtier par pliage ou enroulement d'une platine métallique (10), auquel cas avant l'opération de pliage, on aménage partiellement, par gaufrage en creux, sur la face intérieure (14) de la platine métallique (10), des évidements (18) destinés à loger ultérieurement la colle fusible (21).

3. Procédé selon la revendication 1 ou 2, caractérisé en ce qu'on dépose la colle fusible (21) sur l'aimant (20) et qu'on insère les aimants (20), qui sont pourvus de la colle fusible (21), en position correcte dans l'enveloppe (12) du boîtier.

4. Procédé selon la revendication 1, 2 ou 3, caractérisé en ce que les aimants (20) sont retenus par des moyens de blocage en position (30, 40) et sont supportés, par l'intermédiaire de la colle fusible (21), sur la face intérieure (14) de l'enveloppe (12) du boîtier.

5. Procédé selon la revendication 4, caractérisé en ce qu'il est prévu comme moyens de blocage en position, deux pinces élastiques (30), qui sont disposées dans la direction circonférentielle entre les aimants (20), et précontraignent ces aimants (20), dans la direction radiale, contre la face intérieure (14) de l'enveloppe (12) du boîtier.

6. Procédé selon la revendication 5, caractérisé en ce que les pinces élastiques (30) sont montées sans rivetage entre les aimants (20), auquel cas les aimants (20) sont fixés dans la direction axiale par des butées (32) situées sur les deux faces frontales, et des pattes de sécurité (33) situées sur les pinces élastiques (30) s'engagent dans une zone située entre l'aimant (20) et la face intérieure (14) de l'enveloppe (12) du boîtier.

7. Procédé selon la revendication 4, 5 ou 6, caractérisé en ce qu'un appareil d'écartement (40), utilisé uniquement en tant qu'auxiliaire de montage, est inséré, en tant que moyens de blocage en position, dans le boîtier et précontraint ces aimants (20) dans la direction radiale, contre la face intérieure (14) de l'enveloppe (12) du boîtier.

8. Procédé selon au moins l'une des revendications précédentes, caractérisé en ce qu'on soumet l'enveloppe (12) du boîtier, sur laquelle sont préalablement montés les aimants (20), à une opération de lavage.
